# EUROPEAN PATENT SPECIFICATION

(11) **EP 3 698 959 B1**
(45) Date of publication and mention of the grant of the patent: **16.12.2020**
(21) Application number: 19158069.5
(22) Date of filing: 19.02.2019
(51) Int. Cl.: B29D 30/38, B29D 29/00, B65H 19/18, B65H 19/20

(54) **UNWINDING SYSTEM OF REELS OF A TEXTILE SUBSTRATE PARTICULARLY FOR THE PRODUCTION OF RUBBER COATED CORD**
ABWICKELSYSTEM FÜR ROLLEN EINES TEXTILEN SUBSTRATS, INSBESONDERE ZUR HERSTELLUNG VON GUMMIERTEM SEIL
SYSTEME DE DÉROULEMENT DE BOBINES D'UN SUBSTRAT TEXTILE, EN PARTICULIER POUR LA PRODUCTION DE CORDON REVÊTU DE CAOUTCHOUC

(43) Date of publication of application: 26.08.2020
(73) Proprietor: Rodolfo Comerio Srl, 21058 Solbiate Olona (VA) (IT)
(72) Inventor: COMERIO, Carlo, 21058 Solbiate Olona (VA) (IT)
(74) Representative: M. Zardi & Co S.A.

(56) References cited:
- EP-A2- 1 838 603
- WO-A1-2007/072555
- US-A- 3 554 842

## Description

### Field of application

The invention relates to the field of calendering machines for manufacturing multi-layer semi-finished products comprising a textile substrate, for example textile rubber-coated fabrics.

### Prior art

Rubber-coated fabrics (also called cord) with a textile substrate are widely used for the manufacture of carcasses for tyres, and for other applications such as conveyor belts, drive belts, etc. The term "rubber-coated fabric" or "rubber-coated cord" is understood to denote a semi-finished product which comprises essentially a textile substrate lined on one side, or on both sides, with a layer of elastomer material. The term rubber will be used also in a general manner to denote an elastomer.

The substrate is essentially a fabric or woven yarns of textile material. Usually there is a greater number of warp yarns which are arranged aligned and close together, while the number of weft yarns is the minimum needed to retain the warp yarns.

The substrate is provided wound on large reels and is fed towards a process zone by a suitable unwinding system. The term process zone denotes a zone where the textile substrate undergoes the necessary steps for production of a desired semi-finished product, for example rubber-coated cord.

When a reel of substrate, mounted on an unwinding stand, is nearly used up, a new reel must be mounted on a second unwinding stand and a connection (or joint) must be made between the substrate on the machine, supplied from the nearly empty reel, and the substrate supplied from the new reel.

This operation requires stop the running unwinding device, which means the feed to the process is temporarily interrupted. It is known to provide an accumulator of substrate which is arranged between the unwinding system and the process zone and is able to operate as a buffer and feed the substrate for the time needed to complete the joint, so that production is not interrupted.

Before the substrate runs out, the accumulator receives the substrate at a speed faster than required by the process and therefore accumulates the substrate. Whilst the joint is being formed, with the unwinder stopped, the accumulator starts to unload so as to feed the process. The longer the time taken to form the joint the greater the amount of accumulated material needed to avoid interrupting the process.

In the prior art the execution of the joint is an essentially manual operation, which is performed using a press positioned between the reel unwinders and a pulling unit. This manual operation involves a certain labour cost and in particular results in a relatively long downtime of the unwinder which, in turn, requires the use of a large and expensive accumulator. The size and cost of the accumulator are in fact proportional to its accumulation capacity.

For example a joint prepared by a skilled operator may require 1 to 2 minutes, a time which, considering the speed of current machines, means that a costly and large accumulator. Moreover, the manual operation inevitably introduces the risk of errors, especially if the labour is not highly skilled, and a joint which has not been properly made may result in a non-compliance of the product.

Another drawback of a large accumulator is that, along the path inside the accumulator, the material may lose its width and/or centering; then, expensive centering and widening systems must be used in order to overcome this drawback.

The prior art does not satisfy the above needs and so far has been unable to provide a solution to these problems despite the increasing demand for rubber-coated cord and therefore of the machines for its production.

Patent document WO 2007/072555 A1 discloses a system for unwinding textile reels having the features of the preamble of claim 1.

### Summary of the invention

The invention aims to address the aforementioned needs. The invention in particular has the purpose of automating and speeding up the reel changing and the substrate joining operation for the production of semi-finished products of the type considered, in particular rubber-coated cord.

This object is achieved with a system for unwinding reels of textile substrate according to claim 1.

The unwinding system comprises a first unwinder having a first support for a reel of substrate and a second unwinder having a second support for a reel of substrate, and a press for joining together the substrate, the press comprising two surfaces, for example a movable surface and a stationary surface.

The unwinding system also comprises guide cylinders which are arranged so as to convey a substrate in use, which is selectively unwound from a reel housed in one of the two unwinders, towards an outlet section of the system, with a path of the substrate passing between the two surfaces of the press.

The unwinding system comprises a suitable insertion system, adapted for introducing between the two surfaces of the press a replacement substrate supplied by a reel housed inside the other unwinder, which is not in use. Preferably, said insertion system is realized by means of at least one pulling gripper which is suitably motor-driven, associated with each unwinder.

The unwinding system comprises at least one device adapted to provide an adhesion means between the substrate in use and the replacement substrate. Said adhesion means for example may be preferably a flat elastomer sheet, which is positioned between the two surfaces of the press and then vulcanized, or a double-sided adhesive tape applied to one of the two substrates.

A cutting device is positioned upstream of the press and is arranged to cut selectively the substrate supplied from one of the two unwinders. Said cutting device may be used to cut the tail end of the substrate which has been used up, after the joint has been made with the new substrate. Preferably a respective cutting device, for example a blade, is provided for each unwinder.

The two unwinders can be used alternately and in turn, to ensure the continuous feeding of the substrate to the downstream process. In other words, in normal working conditions, there is one substrate in use which may be supplied from either the first unwinder or the second unwinder. A reel containing the replacement substrate can be provided in the other unwinder which is on standby condition.

Owing to the above-described features of the unwinding system, when the substrate in use is almost used up, the initial portion of the replacement substrate may be guided (by means of the insertion system) into the region between the two surfaces of the press where the substrate in use also passes. The replacement substrate and the substrate in use, therefore, are facing each other in the space between the two surfaces of the joining press. Once the substrate in use and the replacement substrate are in such arrangement and thanks to the aforementioned adhesion means, closing of the press allows the formation of the joint. Once the joint has been formed and the substrate in use upstream of the said joint has been cut, the operation is substantially completed. The new substrate thus becomes the substrate currently in use. These operations are performed by the unwinding system automatically.

Some preferred aspects are described in the dependent claims.

The unwinding system advantageously comprises at least one locking device adapted to retain temporarily the substrate in use during formation of a joint. This device can be realized using well-known technology, for example a movable cylinder arranged to press the substrate against another controlled cylinder.

In a preferred embodiment, the substrate insertion system comprises a respective gripper for each unwinder. Each gripper is motor-driven and guided along a closed path between a zone proximal to the respective reel support and the zone of accommodation of the press. Each gripper is for example mechanically guided by motor-driven chains.

The path of each gripper passes between the two surfaces of the press when the press is open. In this way the gripper can guide the new substrate into the zone for joining together with the substrate in use. The movement of the gripper is advantageously synchronized with the movement of the other components of the unwinding system, such as the press and/or the cutting device.

The gripper of each unwinder has preferably an elongated form which extends in a plane essentially parallel to the substrate, so that the gripper can grip a substrate portion over its entire width. The operation of gripping the portion of replacement substrate may be performed manually.

Preferably the two unwinders are configured and positioned in a substantially mirror arrangement. For example, the two unwinders are arranged facing each other on opposite sides of the press.

The cutting device preferably comprises a first blade positioned to cut the substrate coming from the first unwinder and a second blade positioned to cut the substrate coming from the second unwinder. The first blade or the second blade is used depending on whether the substrate currently in use is supplied by one unwinder or the other one. The blades are positioned upstream of the press.

It should be noted that the terms upstream or downstream refer to the direction of unwinding of the substrate.

The adhesion means may consist of an elastomer ("rubber joint") or a double-sided adhesive tape. The choice of the most appropriate adhesion means can depend on the circumstances. Generally the use of elastomer as an adhesion means has the advantage of being low-cost, but requires a heated press and a suitable pressing time to achieve vulcanization; the use of a double-sided adhesive tape allows even more rapid joint but requires a device for application of the double-sided adhesive tape, and said application device and the double-sided adhesive tape itself represent an additional cost.

In the case of a rubber joint, the unwinding system may comprise a movable carriage which is positioned so as to insert a strip of elastomer material between the substrate in use and the replacement substrate and between the two surfaces of the press. In this way, the following are positioned in sequence between the two surfaces of the press: the substrate in use, the elastomer strip, and the replacement substrate. When the press is closed, the assembly is pressed, the elastomer vulcanizes and penetrates through the yarns of the two substrates forming a permanent joint. The press is heated in order to achieve the desired degree of vulcanization of the elastomer material.

In the case of a joint with double-sided adhesive tape, the unwinder comprises a dispenser of double-sided adhesive tape able to apply double-sided adhesive tape selectively onto the substrate supplied by one of the two unwinders. The dispenser is advantageously displaceable between a first working position suitable for applying double-sided adhesive tape onto the substrate supplied by the first unwinder and a second working position suitable for applying double-sided adhesive tape onto the substrate supplied by the second unwinder. Generally it is preferable to apply the double-sided adhesive tape onto the replacement substrate.

The unwinding system is managed by a suitable control system which controls and coordinates the various components of the unwinding system in particular during formation of the joint. The control system in particular controls and coordinates the positioning in the press of the replacement substrate, the interruption of unwinding of the substrate in use by closing of a special locking device, positioning of the elastomer strip or application of the double-sided adhesive tape as appropriate, closing of the press, cutting of the old substrate, reopening of the press, opening of the locking device and resumption of normal operation.

One aspect of the invention also relates to a method for joining together reels of substrate according to the claims.

The advantages of the invention comprise essentially: a joint-forming operation which is largely automated with only minimum manual intervention; consequently, greater precision and less risk of errors which may affect the product; shorter time for formation of the joint and reduction of the costs associated with the accumulator, including the cost of using systems for realignment and re-widening of the material modified by the long travel path inside the accumulator.

Owing to the high degree of automation, the joint-forming operations as well as positioning of the new substrate are performed while the plant is in operation without having to stop unwinding of the substrate in use. The downtime can be limited to the time strictly needed for formation of the joint in the press and for cutting the old substrate.

An unwinding system according to the invention is able to perform joint formation with a substrate downtime of less than 1 minute and up to about 10 seconds, compared to the 1 minute or more needed with manual procedures. The cost-savings associated with the accumulator are considerable.

These and other advantages will become clear with the aid of the following description relating to a preferred non-limiting embodiment.

### Brief description of the figures

Fig. 1 is a basic diagram of an unwinding system, viewed laterally, according to a preferred embodiment of the invention.
Fig. 2 shows in schematic form some details of the unwinding system according to Fig.1, viewed from above.
Fig. 3 shows in schematic form a perspective view of other details of the unwinding system according to Fig.1.
Figs. 4 to 8 show the unwinding system according to Fig. 1 during different stages of the process for formation of a joint between a reel of substrate which is nearly used up and a new reel. Fig. 5 is a detail of Fig. 4 and Fig. 7 is a detail of Fig. 6.
Fig. 9 shows the unwinding system according to Fig. 1-8 in another working condition.
Fig. 10 shows a variant of the unwinding system of Fig. 1.

### Detailed description

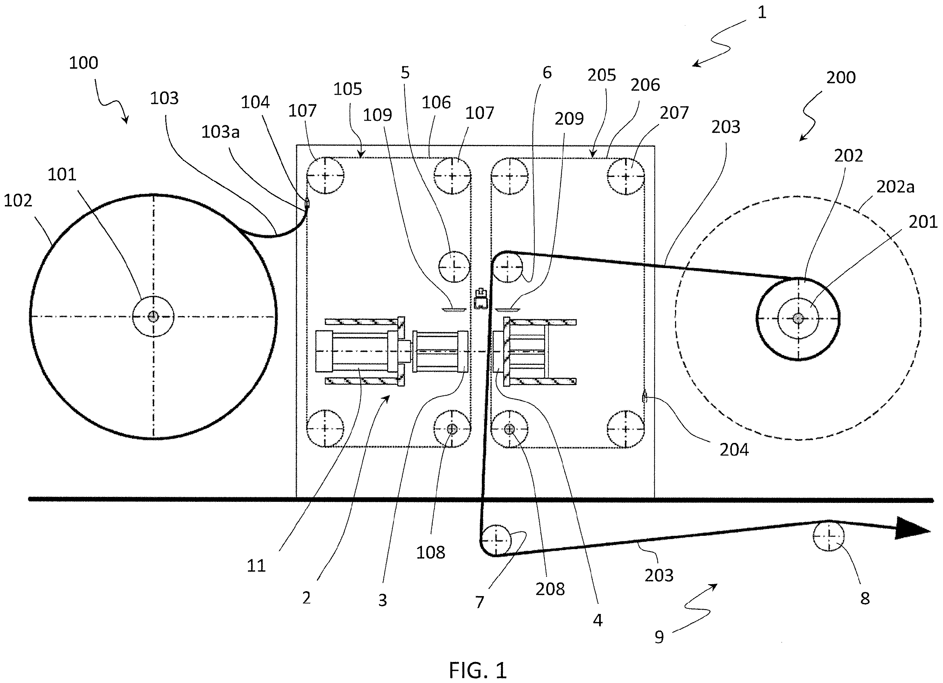

Fig. 1 shows an unwinding system 1 comprising a first unwinder 100 and a second unwinder 200. Said unwinders each comprise a support 101, 201 for a reel 102, 202 of textile substrate 103, 203. Reference is made, for example, to a substrate for the manufacture of rubber-coated cord for tyres.

The unwinding system 1 also comprises a press 2 for joining together the substrate. Said press 2 comprises a movable surface 3 and a stationary surface 4.

The two unwinders 100, 200 have substantially identical structures and are positioned in a mirror arrangement on opposite sides of the press 2.

The unwinding system 1 comprises guide cylinders 5, 6, 7, 8 arranged so as to guide a substrate supplied by one of the two unwinders towards a process zone, which is not shown in Fig. 1, causing the substrate to pass between the two surfaces 3 and 4 of the press 2.

The movable surface 3 is actuated by one or more hydraulic cylinders 11. The surfaces of the press have a width equal to, or greater than, that the width of the substrate, which is generally more than one metre; in view of this considerable width, usually it is preferred to use a plurality of hydraulic cylinders.

During normal operation, the substrate is supplied by one of the two unwinders, while the other unwinder is in on standby. Fig. 1 shows a condition in which the substrate 203 is taken from the reel 202, i.e. from the unwinder 200. The substrate in use 203 is guided and tensioned by the rollers 6, 7 and 8, passing, as can be seen in the figure, between the surfaces 3, 4 of the press 2. The press 2 is open.

Downstream of the press 2 an outlet section 9 of the unwinder 1 can be seen. From said outlet section 9, the substrate 203 is directed towards the process zone where said substrate is used for manufacture of the cord. The direction of unwinding and travel of the substrate is indicated by the arrow in Fig. 1.

The substrate 103 unwound from the reel 102, instead, is ready for use as a replacement substrate.

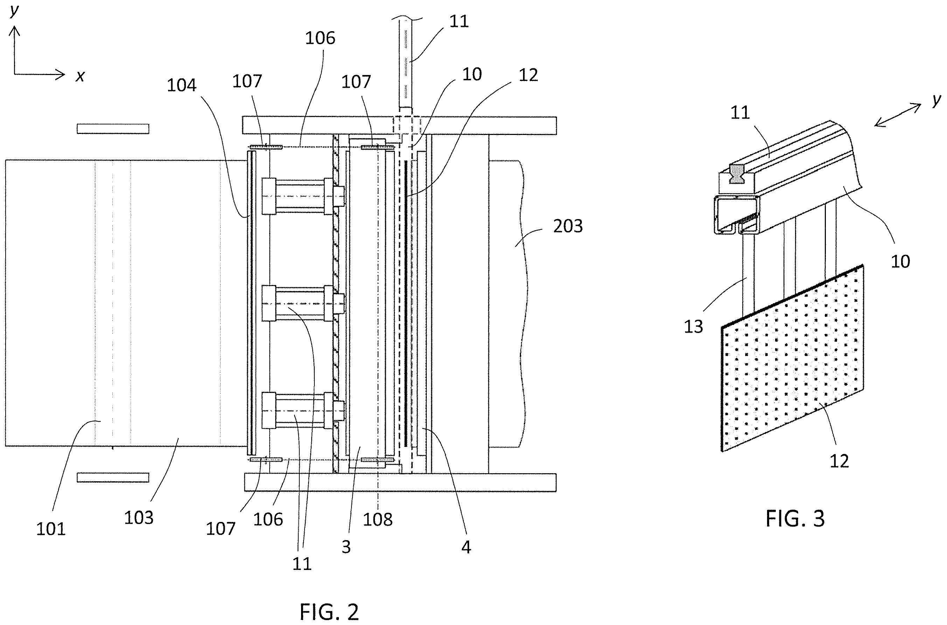

The unwinding system 1 comprises an insertion system adapted for introducing a portion of replacement substrate between the two surfaces of the press. In the example of Fig.1, said insertion system is realized, for each unwinder, with a motor-driven gripper 104, 204 guided along a closed path 105, 205. Both paths 105, 205 of the grippers pass between the two surfaces 3, 4 of the press. Some details of the embodiment of the gripper 104 are visible in Fig. 2. The gripper 104 is essentially an elongated member which is adapted to grip the edge 103a of the substrate 103; the driving of the gripper 104 is obtained for example by a pair of chains 106 (indicated by a broken line) which extend along the closed path 105 and which are moved by gearwheels 107. Fig. 2 shows the motor-driven spindle 108.

The gripper 204 of the unwinder 200 is designed in a similar manner, i.e. is driven along a closed path 205 by a pair of chains 206, gearwheels 207 and the associated drive operating the spindle 208.

The unwinding system 1 also comprises (Figs. 2-3) a carriage 10 adapted to position an elastomer strip, to be used as adhesive for the joint, between the two surfaces of the press 2.

Fig. 3 shows in schematic form an embodiment in which the carriage 10 is movable on a rail 11 arranged in the transverse direction (axis y in the figures). The carriage 10 supports an elastomer strip 12 which is hung from said carriage 10 with thin portions 13 also made of the same elastomer material. The carriage 10 is also preferably motor-driven. Basically the carriage 10 may be extracted from or laterally inserted towards the zone of the press 2, as can be understood from Fig. 2 viewing the arrangement of the rail 11.

Back to Fig. 1, the unwinding system also comprises a pair of blades 109 and 209 which are arranged to cut the substrate supplied from the first unwinder or the second unwinder. The blades 109, 209 are positioned upstream of the press 2 and can cut the substrate along its path between the respective reel 102 or 202 and the press 2.

Fig. 1 shows a condition in which the reel 202 is about to be used up, as made clear by the broken line 202a which represents the initial diameter of the reel.

The unwinding system 1 allows the execution of a rapid joint between the substrate in use 203 and the replacement substrate 103. The joint is formed in the press 2 using the strip 12 as adhesion means between the substrates 103 and 203 and by then cutting the substrate 203 with the blade 209; at this point the manufacturing process continues being now supplied by the reel 102.

During the formation of the joint, the unwinding of the substrate 203 is stopped and a suitable locking device is closed, the locking device being formed for example by a pressure cylinder which closes onto a counter-cylinder, in the outlet section 9 or downstream thereof. The process in the meantime is fed by a suitable accumulator.

After the joint has been completed, the empty reel 202 may be removed and a new reel inserted into the unwinder 200. Said new reel will be used until the reel 102 is used up. It can be understood that the unwinders 100 and 200 are used in turn.

The execution of the joint is essentially automated, being managed by a control system of the unwinding system 1 or of the line along which the unwinding system 1 is inserted. The control system is for example on a PLC.

The execution of the joint is now described in greater detail.

Fig. 1 shows the initial part 103a of the substrate 102 is engaged with the gripper 104. Insertion of the rim 103a in the gripper 104 may be performed manually and is essentially the only manual operation required for formation of the joint, the other operations being entirely automated.

The gripper 104, which is actuated by means of the motor-driven spindle 108 and the chains 106, transports the replacement substrate 103 into the joining zone, namely between the two surfaces 3 and 4 of the press 2. The gripper 104 stops underneath the press 2 so that the two substrates 103, 203 face each other between the surfaces 3, 4 of the press. It should be noted that the replacement substrate 103, driven by the gripper 104, rests against the cylinder 5.

The motor-driven carriage 10 is also actuated to position the elastomer strip 12 between the two surfaces of the press.

It should be noted that during these steps it is not yet necessary to stop the substrate in use 203; in other words these operations for preparation of the material for the joint can be performed in normal working conditions.

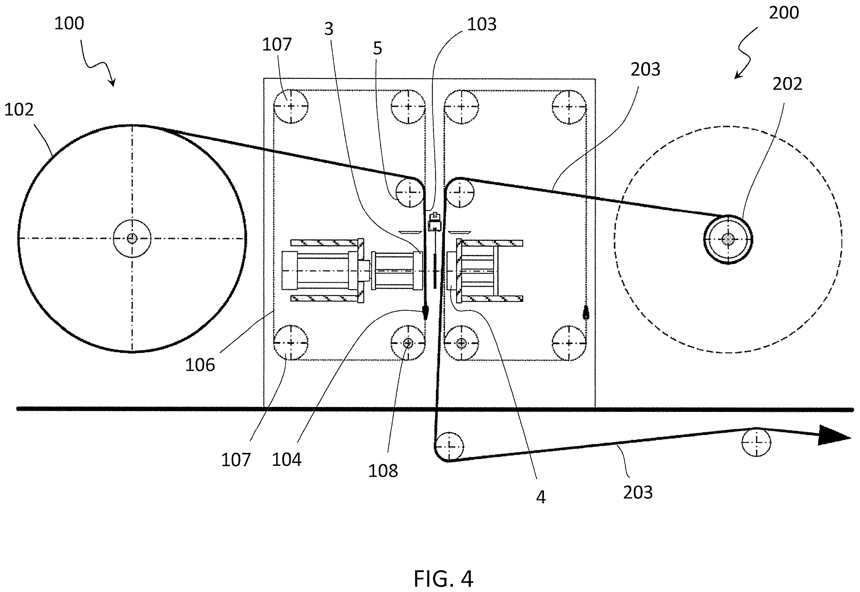

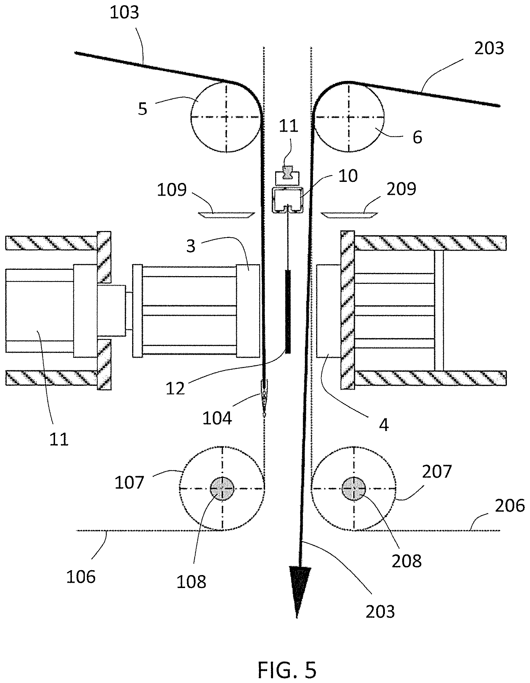

Fig. 4 shows the condition in which, further to the substrate in use 203, also the replacement substrate 103 and the elastomer strip 12 are placed between the two surfaces 3, 4 of the press 2. The elastomer strip is arranged between the substrates 103 and 203 as seen in the detail of Fig. 5.

In the condition of Figs. 4 and 5, the unwinding system 1 is ready for execution of the joint by means of closing of the press 2.

The substrate 203 is stopped (by closing the suitable locking device) and the press 2 is closed. The movable surface 3 is pushed by the hydraulic cylinders 11 against the stationary surface 4. Both the surfaces 3, 4 of the press are also heated.

The press 2 remains closed for a period of time, generally 30-50 seconds, needed to vulcanize the elastomer 12. During the closing time of the press, the blade 209 cuts the substrate in use 203 above the press. The blade 209 cuts also the supporting portions 13 of the elastomer strip.

The gripper 104 opens and frees the initial rim 103a of the substrate 103. Upon operation of the motor-driven spindle 108, the gripper 104 moves away from the press 2 and positions itself underneath the unwinding plane of the substrate 103.

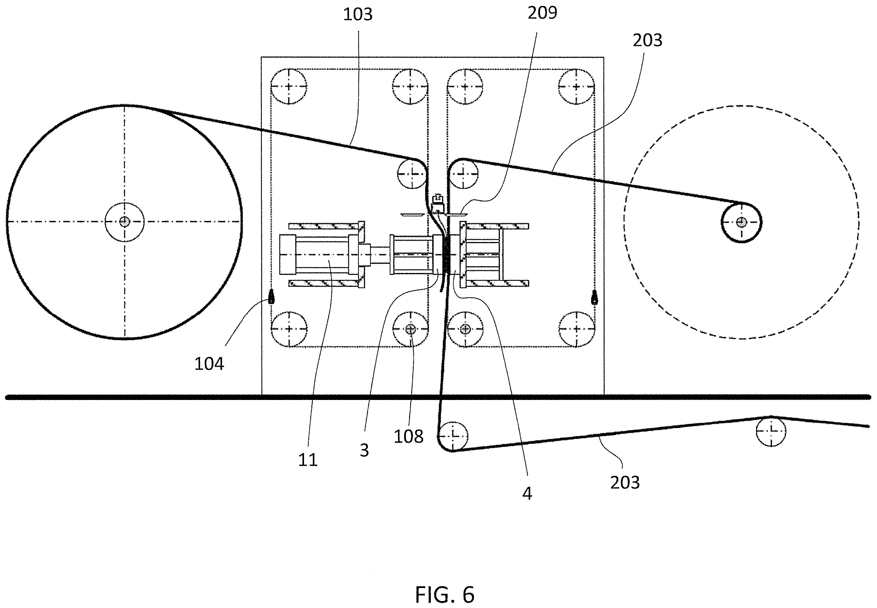

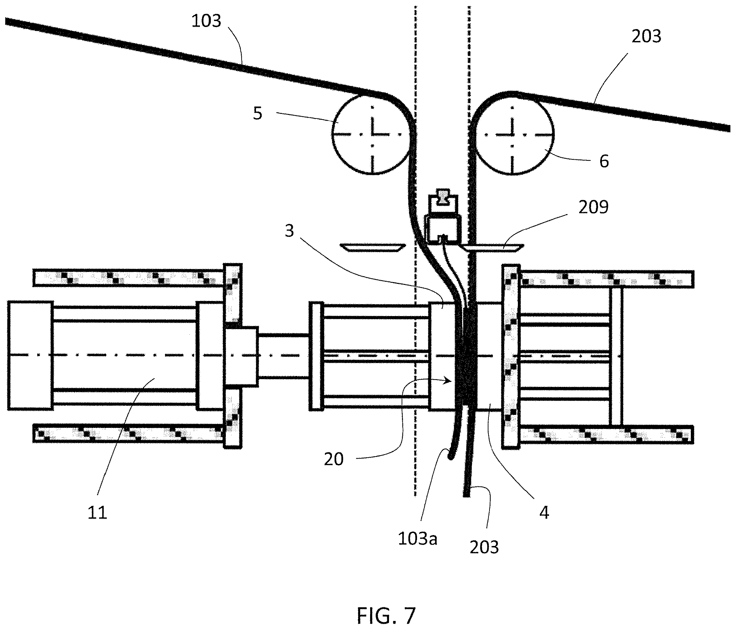

Figs. 6 and 7 show the press 2 in a closed condition with formation of a joint 20 between the two substrates 103 and 203 sandwiched together with the elastomer inside the press. Fig. 7 shows the initial rim 103a of the substrate 103 freed by the gripper 104. The blade 209 cuts the tail end of the substrate 203.

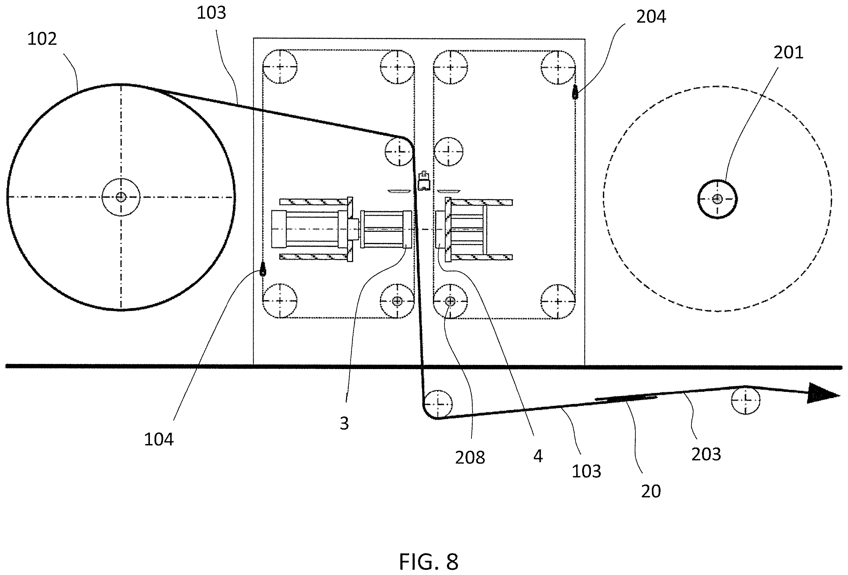

Fig. 8 shows the condition upon reopening of the press 2 where the reel change-over has been completed. The elastomer 12 vulcanized as a result of the heated press 2 has formed the joint 20, creating consequently a permanent joint between the substrate 203 and the substrate 103.

The process can continue, being supplied by the reel 102, while the empty reel can be removed after recovery of the tail end of the material. The substrate 103 therefore becomes the substrate in use. Once the reel 202 has been removed, the gripper 204 (moved by the spindle 208) is positioned above the substrate unwinding plane where said gripper 204 is ready for use.

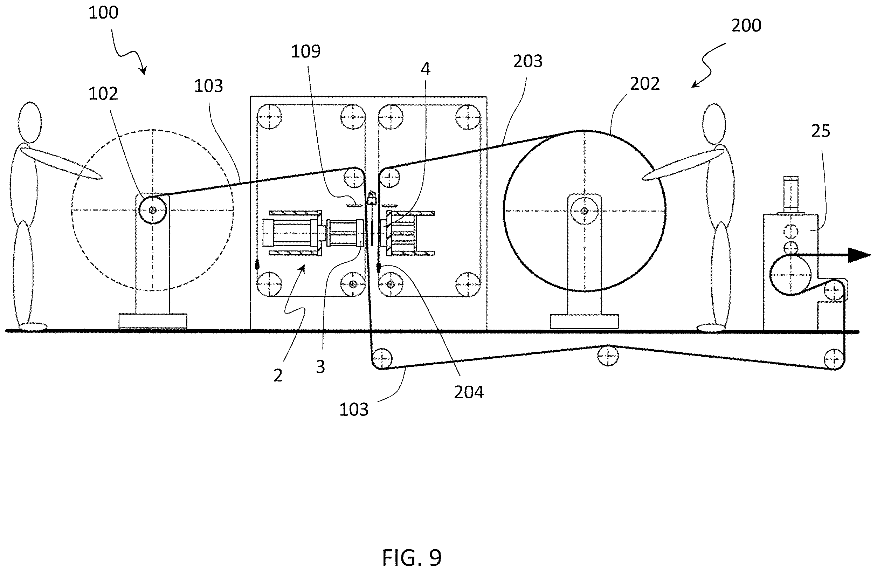

Fig. 9 shows an operating condition which is substantially the same as in Fig. 1, despite the reel 102 of the unwinder 100 being nearly used up. When this condition is reached, the process described above is repeated substantially in a mirrored way, that is positioning a rim of a new reel, housed in the unwinder 200, between the two surfaces 3, 4 of the press 2 and forming a joint with the substrate 103, which is then cut by the blade 109.

Fig. 9 also shows a unit 25 for pulling the substrate in use (which in Fig. 9 is the substrate 103). The device for locking the substrate may be provided for example downstream of said pulling unit 25.

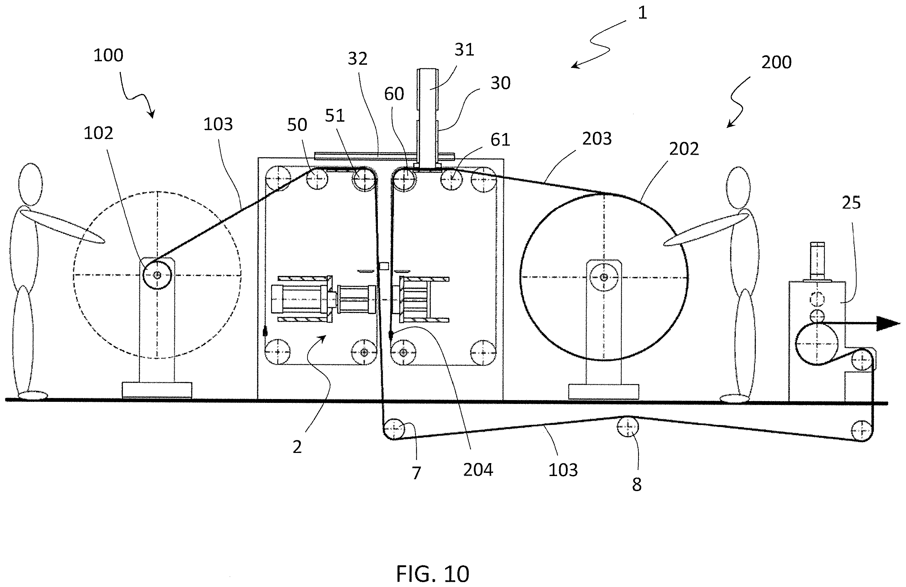

Fig. 10 is similar to Fig. 9, but shows an example of a variation of the invention wherein the joint is performed using a double-sided adhesive tape instead of rubber.

The unwinding system 1 in this case comprises a head 30 for dispensing a double-sided adhesive tape 31.

Said head 30 is slidable in the direction of the width of the substrate (axis y in Fig. 2) so as to be able to apply the double-sided adhesive tape 31 over the whole width of the substrate. The head 30 furthermore can move along the axis x along rails 32 to be positioned above the substrate 103 or above the substrate 203. Both these movements of the head 30 are motorized.

Preferably the double-sided adhesive tape 31 is applied onto the replacement substrate. In the example shown in Fig. 10 the unwinding system 1 is in the condition where the substrate 103 is in use and close to being used up, and the unwinding system 1 is ready to form a joint with the new substrate 203. Consequently, the head 30 is positioned above the path of the substrate 203. In this embodiment the arrangement of the guide cylinders 50, 51 and 60, 61 in place of the cylinders 5 and 6 described above should be noted. Said guide cylinders 50, 51 and 60, 61 define a horizontal portion of the path of the substrate 103 and 203, suitable for the application of the double-sided adhesive tape 31.

For the rest, the operation of the embodiment of Fig. 10 is essentially similar to what has been described with reference to Figs. 1-9. The part of the substrate 203 where the double-sided adhesive tape 31 is applied is transported, by means of the gripper 204, between the surfaces 3 and 4 of the press 2; closing of the press 2 causes the adhesion and formation of the joint. The closing time of the locking system (and therefore the accumulation required) is further reduced compared to the rubber joint because the adhesion is almost instantaneous as it is not necessary to wait for vulcanization of the rubber.

The invention therefore achieves the aforementioned objects. The invention provides an unwinder with automatic joint which allows the execution of the joint in a precise and fast manner, with a uniform quality, and requires an accumulator smaller than that of the prior art, resulting in significant cost savings.

## Claims

1. System (1) for unwinding reels of a textile substrate, adapted to feed the substrate to a machine for the manufacturing of a multi-layer product such as a rubber-coated cord, comprising:
a first unwinder (100) having a first support for a reel of substrate and a second unwinder (200) having a second support for a reel of substrate, and a press (2) for joining together the substrate, the press comprising two surfaces (3, 4);
guide cylinders (5-8) which are arranged so as to convey a substrate in use (203), which is selectively unwound from a reel (202) housed in one (200) of said two unwinders, towards an outlet section (9) of the unwinding system, with a path of the substrate (203) passing between the two surfaces (3, 4) of the press (2);
an insertion system (104, 204) adapted to introduce between the two surfaces of the press a replacement substrate (103) which is selectively unwound from a reel (102) housed inside the other (100) of said two unwinders;
at least one device adapted to provide an adhesion means between the substrate in use and the replacement substrate;
a cutting device (109, 209) adapted to selectively cut the substrate in use with a cut upstream of the press (2);
**characterised in that** the system for inserting the substrate comprises, for each unwinder (100, 200), a respective gripper (104, 204) guided and motor-driven along a closed path (105, 205) between a zone close to the respective reel support of the unwinder and the zone of accommodation of the press (2), said path of the gripper passing between the two surfaces (3, 4) of the press when the press is open.

2. Unwinding system according to claim 1, comprising at least one locking device adapted to retain temporarily the substrate in use (203) during the execution of a joint with the replacement substrate (103).

3. Unwinding system according to any of the previous claims, wherein the gripper (104) of each unwinder has an elongated form which extends in a plane essentially parallel to the substrate, so that it can grip a rim of the substrate over its full width.

4. Unwinding system according to one of the preceding claims, wherein the two unwinders (100, 200) are configured and positioned in a substantially mirror arrangement on opposite sides of the press (2).

5. Unwinding system according to one of the preceding claims, wherein the cutting device comprises a first blade (109) positioned to cut the substrate coming from the first unwinder and a second blade (209) positioned to cut the substrate coming from the second unwinder.

6. Unwinding system according to one of the preceding claims, wherein the device for providing the adhesion means comprises a movable carriage (10) which is positioned to insert a strip of elastomer material (12) between the substrate in use and the replacement substrate and between the two surfaces of the press, and the press is heated to obtain vulcanization of the elastomer material during the pressing.

7. Unwinding device according to one of claims 1 to 6, wherein the device for providing the adhesion means comprises a dispenser (30) of a double-sided adhesive tape.

8. Unwinding system according to claim 7, wherein the dispenser (30) of double-sided adhesive tape can be positioned selectively to apply double-sided adhesive tape onto the substrate coming from either one of the two unwinders (100, 200).

9. Machine for manufacturing a multi-layer product, particularly a rubber-coated cord of the type which can be used for the production of tyres, comprising a system (1) for unwinding reels of textile substrate according to any one of the preceding claims.

10. Method for forming a joint between a first textile substrate in use (203) and a similar second replacement substrate (103), in a machine for manufacturing a semi-finished product comprising said substrate, such as a rubber-coated cord, wherein the method comprises the use of an unwinding system (1) according to one of claims 1-8 and comprises the following steps:
- conveying a portion of the replacement substrate into the zone between the two surfaces (3, 4) of the press (2), the replacement substrate (103) thus facing the substrate in use (203);
- providing an adhesion means between the two substrates, by applying a double-sided adhesive tape (31) onto the replacement substrate or by positioning an elastomer strip (12) between the surfaces of the press and between the two substrates;
- temporarily stopping the unwinding of the substrate in use;
- closing the press obtaining a joint (20) between the two substrates owing to the adhesion means, possibly with a vulcanization of the elastomer where if provided;
- cutting the first substrate (203) upstream of the press (2).

## Patentansprüche

1. System (1) zum Abwickeln von Spulen eines textilen Substrats, angepasst zum Zuführen des Substrats zu einer Maschine zur Herstellung eines mehrschichtigen Produkts, wie etwa eines Gummi-beschichteten Kabels, umfassend:
einen ersten Abwickler (100) mit einem ersten Träger für eine Substratspule und einen zweiten Abwickler (200) mit einem zweiten Träger für eine Substratspule, und eine Presse (2) zum Zusammenfügen des Substrats, wobei die Presse zwei Oberflächen (3, 4) aufweist;
Führungszylinder (5-8), die so angeordnet sind, dass sie ein in Gebrauch befindliches Substrat (203), das selektiv von einer in einem der beiden Abwickler (200) untergebrachten Spule (202) abgewickelt wird, zu einem Auslassabschnitt (9) des Abwickelsystems befördern, mit einem Weg des Substrats (203), der zwischen den beiden Oberflächen (3, 4) der Presse (2) verläuft;
ein Einbringungssystem (104, 204), das angepasst ist, zwischen den beiden Oberflächen der Presse ein Ersatzsubstrat (103) einzubringen, das selektiv von einer im Inneren des anderen der beiden Abwickler (100) untergebrachen Spule (102) abgewickelt wird;
mindestens eine Vorrichtung, die angepasst ist, ein Adhäsionsmittel zwischen dem in Gebrauch befindliche Substrat und dem Ersatzsubstrat bereitzustellen;
eine Schneidvorrichtung (109, 209), die angepasst ist, das in Gebrauch befindliche Substrat mit einem Schnitt stromaufwärts der Presse (2) selektiv zu schneiden;
**dadurch gekennzeichnet, dass** das System zum Einbringen des Substrats für jeden Abwickler (100, 200) einen jeweiligen Greifer (104, 204) umfasst, der entlang eines geschlossenen Weges (105, 205) zwischen einer Zone nahe des jeweiligen Spulenträgers des Abwicklers und der Zone der Unterbringung der Presse (2) geführt und motorisch angetrieben wird, wobei der Weg des Greifers zwischen den beiden Oberflächen (3, 4) der Presse verläuft, wenn die Presse geöffnet ist.

2. Abwickelsystem nach Anspruch 1, umfassend mindestens eine Verriegelungsvorrichtung, die angepasst ist, das in Gebrauch befindliche Substrat (203) während der Ausführung einer Verbindung mit dem Ersatzsubstrat (103) vorübergehend anzuhalten.

3. Abwickelsystem nach einem der vorhergehenden Ansprüche, wobei der Greifer (104) jedes Abwicklers eine längliche Form aufweist, die sich in einer zu dem Substrat im wesentlichen parallelen Ebene erstreckt, so dass er einen Rand des Substrats über seine volle Weite greifen kann.

4. Abwickelsystem gemäß einem der vorstehenden Ansprüche, wobei die beiden Abwickler (100, 200) in einer im wesentlichen spiegelbildlichen Anordnung auf gegenüberliegenden Seiten der Presse (2) eingerichtet und angeordnet sind.

5. Abwickelsystem nach einem der vorstehenden Ansprüche, wobei die Schneidvorrichtung eine erste Klinge (109) umfasst, die so angeordnet ist, dass sie das von dem ersten Abwickler kommende Substrat schneidet, und eine zweite Klinge (209) umfasst, die so angeordnet ist, dass sie das von dem zweiten Abwickler kommende Substrat schneidet.

6. Abwickelsystem nach einem der vorstehenden Ansprüche, wobei die Vorrichtung zum Bereitstellen des Adhäsionsmittels einen beweglichen Schlitten (10) umfasst, der so angeordnet ist, dass er einen Streifen Elastomermaterial (12) zwischen dem in Gebrauch befindlichen Substrat und dem Ersatzsubstrat und zwischen den beiden Oberflächen der Presse einbringt, und die Presse erhitzt wird, um eine Vulkanisation des Elastomermaterials während des Pressens zu erhalten.

7. Abwickelvorrichtung nach einem der Ansprüche 1 bis 6, wobei die Vorrichtung zur Bereitstellung des Adhäsionsmittels einen Spender (30) für ein doppelseitiges Klebeband umfasst.

8. Abwickelsystem nach Anspruch 7, wobei der Spender (30) für doppelseitiges Klebeband selektiv positioniert werden kann, um doppelseitiges Klebeband auf das von einem der beiden Abwickler (100, 200) kommende Substrat aufzubringen.

9. Maschine zur Herstellung eines mehrschichtigen Produkts, insbesondere eines Gummi-beschichteten Kabels des Typs, der für die Herstellung von Reifen verwendet werden kann, umfassend ein System (1) zum Abwickeln von Spulen eines textilen Substrats gemäß einem der vorhergehenden Ansprüche.

10. Verfahren zum Bilden einer Verbindung zwischen einem ersten in Gebrauch befindlichen textilen Substrat (203) und einem ähnlichen zweiten Ersatzsubstrat (103) in einer Maschine zur Herstellung eines Halbfertigprodukts, umfassend das Substrat, wie beispielsweise ein Gummi-beschichtetes Kabel, wobei das Verfahren die Verwendung eines Abwickelsystems (1) nach einem der Ansprüche 1-8 und die folgenden Schritte umfasst:
- Fördern eines Teils des Ersatzsubstrats in die Zone zwischen den beiden Oberflächen (3, 4) der Presse (2), wobei das Ersatzsubstrat (103) somit dem in Gebrauch befindlichen Substrat (203) begegnet;
- Bereitstellen eines Adhäsionsmittels zwischen den beiden Substraten durch Aufbringen eines doppelseitigen Klebebandes (31) auf das Ersatzsubstrat oder durch Anordnen eines elastomeren Streifens (12) zwischen den Oberflächen der Presse und zwischen den beiden Substraten;
- vorübergehendes Anhalten des Abwickelns des in Gebrauch befindlichen Substrats;
- Schließen der Presse, um eine Verbindung (20) zwischen den beiden Substraten aufgrund des Adhäsionsmittels zu erhalten, eventuell mit einer Vulkanisierung des Elastomers, falls vorgesehen;
- Schneiden des ersten Substrats (203) stromaufwärts der Presse (2).

## Revendications

1. Système (1) de déroulement de bobines d'un substrat textile, adapté à fournir le substrat à une machine pour la fabrication d'un produit multicouche tel qu'un cordon revêtu de caoutchouc, comprenant :
un premier dérouleur (100) présentant un premier support pour une bobine de substrat et un deuxième dérouleur (200) présentant un deuxième support pour une bobine de substrat et une presse (2) pour réunir le substrat, la comprenant deux surfaces (3, 4),
des cylindres de guidage (5-8) qui sont disposés de manière à conduire un substrat en utilisation (203), qui est sélectivement déroulé à partir d'une bobine (202) logée dans un (200) des deux dits dérouleurs, en direction d'une section de sortie (9) du système de déroulement, avec une trajectoire du substrat (203) passant entre les deux surfaces (3, 4) de la presse (2),
un système d'insertion (104, 204) adapté à introduire entre les deux surfaces de la presse un substrat de remplacement (103) qui est sélectivement déroulé à partir d'une bobine (102) logée à l'intérieur de l'autre (100) des deux dits dérouleurs,
au moins un dispositif adapté à fournir un moyen d'adhésion entre le substrat en utilisation et le substrat de remplacement,
un dispositif de découpage (109, 209) adapté à découper sélectivement le substrat en utilisation avec une découpe en amont de la presse (2),
**caractérisé en ce que** le système d'insertion du substrat comprend, pour chaque dérouleur (100, 200), une pince respective (104, 204) guidée et entraînée par moteur le long d'une trajectoire close (105, 205) entre une zone proche du support respectif de la bobine du dérouleur et la zone de logement de la presse (2), ladite trajectoire de la pince passant entre les deux surfaces (3, 4) de la presse quand la presse est ouverte.

2. Système de déroulement selon la revendication 1, comprenant au moins un dispositif de verrouillage adapté à retenir temporairement le substrat en utilisation (203) pendant l'exécution d'une jointure avec le substrat de remplacement (103).

3. Système de déroulement selon l'une quelconque des revendications précédentes, **caractérisé en ce que** la pince (104) de chaque dérouleur présente une forme allongée qui s'étend dans un plan essentiellement parallèle au substrat, de manière à pouvoir agripper une bordure du substrat sur toute sa largeur.

4. Système de déroulement selon l'une des revendications précédentes, **caractérisé en ce que** les deux dérouleurs (100, 200) sont configurés et positionnés dans une disposition essentiellement en miroir sur des côtés opposés de la presse (2) .

5. Système de déroulement selon l'une des revendications précédentes, **caractérisé en ce que** le dispositif de découpage comprend une première lame (109) placée pour couper le substrat provenant du premier dérouleur et une deuxième lame (209) placée pour couper le substrat provenant du deuxième dérouleur.

6. Système de déroulement selon l'une des revendications précédentes, **caractérisé en ce que** le dispositif pour fournir le moyen d'adhérence comprend un chariot mobile (10) qui est positionné de manière à insérer une bande de matériau élastomère (12) entre le substrat en utilisation et le substrat de remplacement et entre les deux surfaces de la presse et la presse est chauffée afin d'obtenir la vulcanisation du matériau élastomère pendant le pressage.

7. Dispositif de déroulement selon l'une des revendications 1 à 6, **caractérisé en ce que** le dispositif pour fournir le moyen d'adhérence comprend un distributeur (30) de ruban adhésif à double face.

8. Système de déroulement selon la revendication 7, **caractérisé en ce que** le distributeur (30) de ruban adhésif à double face peut être positionné sélectivement pour appliquer du ruban adhésif double-face sur le substrat provenant de l'un ou l'autre des deux dérouleurs (10, 200).

9. Machine de fabrication d'un produit multicouche, en particulier un cordon revêtu de caoutchouc du type qui peut être utilisé pour la production de pneus, comprenant un système (1) pour le déroulement de bobines de substrat textile selon l'une quelconque des revendications précédentes.

10. Procédé de formation d'une jointure entre un premier substrat textile en utilisation (203) et un deuxième substrat de remplacement similaire (103), dans une machine pour la fabrication d'un produit semi-fini comprenant le dit substrat, comme un cordon revêtu de caoutchouc, où le procédé comprend l'utilisation d'un système de déroulement (1) selon l'une des revendications 1 à 8 et comprend les étapes suivantes :
- convoyer une partie du substrat de remplacement dans la zone entre les deux surfaces (3, 4) de la presse (2), le substrat de remplacement (103) faisant ainsi face au substrat en utilisation (203),
- fournir un moyen d'adhérence entre les deux substrats, en appliquant un ruban adhésif à double face (31) sur le substrat de remplacement ou en positionnant une bande d'élastomère (12) entre les surfaces de la presse et entre les deux substrats,
- arrêter temporairement le déroulement du substrat en utilisation,
- fermer la presse en obtenant une jointure (20) entre les deux substrats grâce au moyen d'adhésion, éventuellement avec une vulcanisation de l'élastomère si elle est prévue,
- couper le premier substrat (203) en amont de la presse (2) .
